# EUROPEAN PATENT APPLICATION

(11) **EP 4 213 333 A1**
(43) Date of publication of application: **19.07.2023**
(21) Application number: 22165306.6
(22) Date of filing: 30.03.2022
(51) Int. Cl.: H02J 7/00

(54) **BATTERY POWERED SYSTEM AND BATTERY POWERED METHOD**

(30) Priority: 14.01.2022 US 202263299410 P; 29.03.2022 US 202217706615
(71) Applicant: Atop Technologies, Inc., 30076 Hsinchu (TW)
(72) Inventor: CHAN, Yuan Chen, 302 Zhubei City (TW); WANG, Chih-Ke, 330 Taoyuan City (TW); CHANG, Chin-Hsing, 231 New Taipei City (TW)
(74) Representative: Becker, Eberhard

(57) **Abstract**

A battery powered system and a battery powered method are provided. The battery powered method includes: disposing a first power connector and a first magnet on a first connecting face (110) of a first electronic device (10); and disposing a second power connector and a second magnet on a second connecting face (210) of a first battery device (20), wherein the first power connector is connected to the second power connector in response to the first magnet and the second magnet being attached to each other, and the first battery device (20) powers the first electronic device (10) via the first power connector. The first electronic device (10) may be an electronic label or tag used to indicate the location or quantity of inventory items placed on shelf racks in a warehouse.

## Description

### BACKGROUND

### Technical Field

The disclosure is directed to a battery powered system and a battery powered method.

### Description of Related Art

Pick-to-light systems assist in warehouse management by facilitating inventory putting and picking processes. Electronic labels (or "tags") for each item may be placed on shelf racks near the corresponding inventory item. The tag may include a light that illuminates to signal the location or quantity of inventory items placed on the shelf racks. Usually, the tag may also include a screen for displaying item details, as well as control buttons for configuration and/or for confirming picking and putting quantities. Obviously, the tag requires both data input from a host controller and power to operate.

Many pick-to-light systems incorporate data and power cabling into storage racks for spatial efficiency. However, wireless and cableless tags are more efficient since they can be moved and attached anywhere, offering flexibility for space optimization, temporary storage, seasonal items, or other scenarios. As communication technology evolves, it is now possible to transmit data from the controller host to tags through wireless means, and for power, a simple battery is all it takes to convert a cabled tag to a cableless tag.

Replacing or recharging batteries every few days, however, countermines the efficiency of cableless tags. Besides extra labor, removing spent batteries from the tag will require the tag to reboot, which is especially inefficient because rebooting the tag can be time-consuming.

### SUMMARY

The disclosure is directed to a battery powered system and a battery powered method. The disclosure provides a convenient way to connect one or more battery devices to one or more electronic devices.

The disclosure is directed to a battery powered system. The battery powered system including a first electronic device with a first connecting face and a first battery with a second connecting face, wherein the first connecting face includes a first power connector and a first magnet, wherein the second connecting face includes a second power connector and a second magnet. The first power connector is connected to the second power connector in response to the first magnet and the second magnet being attached to each other, and the first battery device powers the first electronic device via the first power connector.

In one embodiment, the first electronic device further including a third connecting face including a third power connector and a third magnet, wherein a first gender of the first power connector is different from a second gender of the third power connector, wherein a first magnetic polarity of the first magnet is different from a second magnet polarity of the third magnet.

In one embodiment, the first battery device further including a third connecting face including a third power connector and a third magnet, wherein a first gender of the second power connector is different from a second gender of the third power connector, wherein a first magnetic polarity of the second magnet is different from a second magnet polarity of the third magnet.

In one embodiment, the first battery device further including a battery and a diode. The battery includes a positive terminal and a negative terminal and the diode includes an anode and a cathode, wherein the negative terminal is connected to the second power connector and the third power connector, wherein the anode is connected to the positive terminal and the cathode is connected to the second power connector and the third power connector.

In one embodiment, the battery powered system further including a second battery device connected to a third connecting face of the first electronic device so as to power the first electronic device.

In one embodiment, the first electronic device is powered by the first battery device in response to a first voltage of the first battery device being greater than a second voltage of the second battery device.

In one embodiment, the battery powered system further including a second electronic device, wherein the first electronic device shares power with the second electronic device in response to the second electronic device being connected to a third connecting face of the first electronic device.

In one embodiment, the battery powered system further including a second battery device, wherein the first electronic device is powered by at least one of the first battery device and the second battery device in response to the second battery device being connected to a third connecting face of the first battery device.

In one embodiment, the first electronic device is powered by the first battery device in response to a first voltage of the first battery device being greater than a second voltage of the second battery device.

In one embodiment, the battery powered system further including a second electronic device connected to a third connecting face of the first battery device, wherein the first battery device powers the first electronic device and the second electronic device.

In one embodiment, the first electronic device is an electronic label.

The disclosure is directed to a battery powered system. The battery powered method including: disposing a first power connector and a first magnet on a first connecting face of a first electronic device; and disposing a second power connector and a second magnet on a second connecting face of a first battery device, wherein the first power connector is connected to the second power connector in response to the first magnet and the second magnet being attached to each other, and the first battery device powers the first electronic device via the first power connector.

In view of foregoing, the disclosure provides electronic devices with easy installation, flexible configuration and placement, and uninterrupted power.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of battery powered system according to an embodiment of the disclosure.
FIG. 2 illustrates a schematic diagram of electronic device 10 according to an embodiment of the disclosure.
FIG. 3 illustrates a schematic diagram of connecting face 110 according to an embodiment of the disclosure.
FIG. 4 illustrates a schematic diagram of connecting face 120 according to an embodiment of the disclosure.
FIG. 5 illustrates a schematic diagram of back face 140 according to an embodiment of the disclosure.
FIG. 6 illustrates a schematic diagram of battery device 20 according to an embodiment of the disclosure.
FIG. 7 illustrates a schematic diagram of connecting face 210 according to an embodiment of the disclosure.
FIG. 8 illustrates a schematic diagram of connecting face 220 according to an embodiment of the disclosure.
FIG. 9 illustrates examples of device connection configurations according to an embodiment of the disclosure.
FIG. 10 illustrates a flowchart of battery powered method according to an embodiment of the disclosure.

### DESCRIPTION OF THE EMBODIMENTS

In order to make the disclosure more comprehensible, several embodiments are described below as examples of implementation of the disclosure. Moreover, elements/components/steps with the same reference numerals are used to represent identical or similar parts in the figures and embodiments where appropriate.

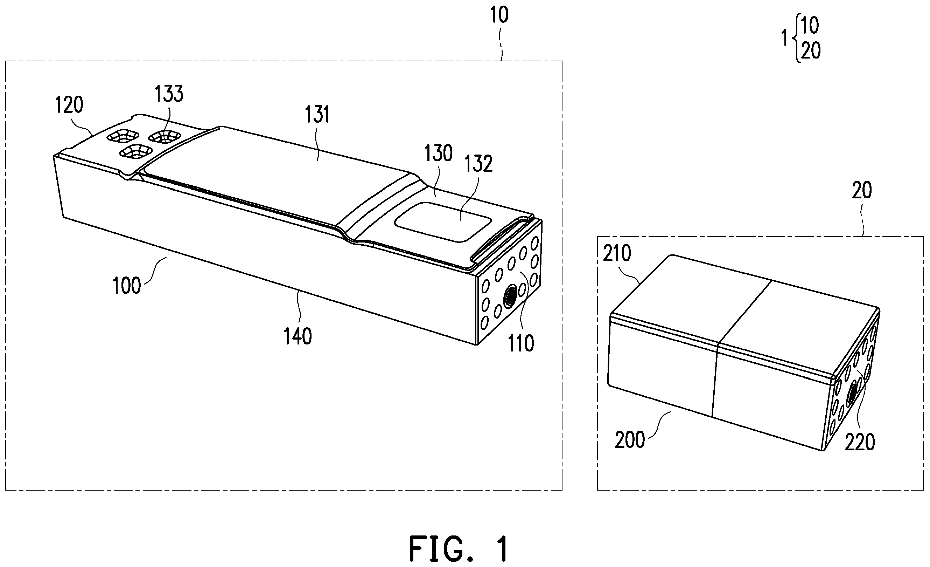

FIG. 1 illustrates a schematic diagram of battery powered system 1 according to an embodiment of the disclosure. The battery powered system 1 may include at least one electronic device 10 and at least one battery device 20. Although only one electronic device 10 and one battery device 20 are shown in FIG. 1, the number of electronic device 10 or battery device 20 of the battery powered system 1 is not limited thereto. For example, the number of electronic device 10 or battery device 20 may equal to any positive integer. The battery device 20 may be connected to the electronic device 10 so as to power the electronic device 10.

In one embodiment, the electronic device 10 may include a housing 100 in the shape of, for example, a hexahedron (e.g., cuboid), wherein the housing 100 may include a connecting face 110 (also referred to as "right face" of the electronic device 10), a connecting face 120 (also referred to as "left face" of the electronic device 10), a front face 130, and a back face 140. The connecting face 110 may be opposite to the connecting face 120 and the front face 130 may be opposite to the back face 140.

In one embodiment, the electronic device 10 may be an electronic label or an electronic tag of a pick-to-light system. The front face 130 may include components for implementing the functions of the electronic label. For example, the front face 130 may include a display 131, a light indicator button 132, and one or more control button 133, wherein the display 131 may include a thin film transistor (TFT) display. The display 131 may be used for displaying details of inventory items. The light indicator button 132 may be used for indicating the location or the quantity of inventory items on the shelf rack. The control button 133 may be used for configuring the electronic device 10. Since TFT display needs a lot of time to load image files, rebooting the electronic device 10 would be time consuming. How to recharge the battery for the electronic device10 without interrupting power supply is an important issue.

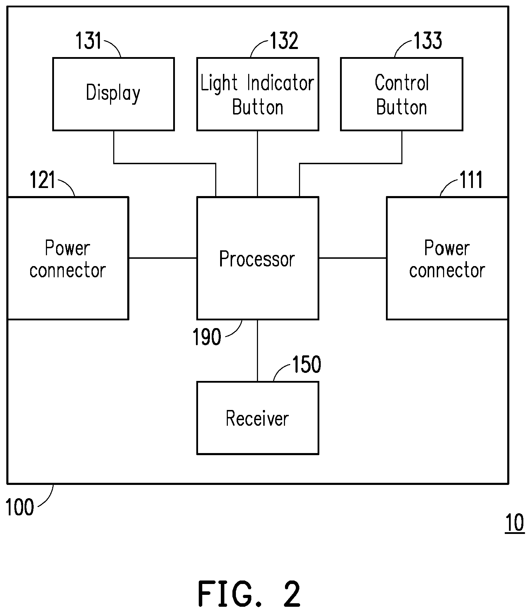

FIG. 2 illustrates a schematic diagram of electronic device 10 according to an embodiment of the disclosure. The electronic device 10 may include a processor 190, a power connector 111, a power connector 121, a display 131, a light indicator button 132, a control button 133, and a receiver 150. The processor 190 may be coupled to the power connector 111, the power connector 121, the display 131, the light indicator button 132, the control button 133, and the receiver 150, wherein the power connector 111 may be disposed on the connecting face 110 and the power connector 121 may be disposed on the connecting face 120.

The processor 190 is, for example, a Central Processing Unit (CPU), or other programmable general purpose or special purpose Micro Control Unit (MCU), a microprocessor, a Digital Signal Processor (DSP), a programmable controller, an Application Specific Integrated Circuit (ASIC), a Graphics Processing Unit (GPU), an Arithmetic Logic Unit (ALU), a Complex Programmable Logic Device (CPLD), a Field Programmable Gate Array (FPGA) or other similar device or a combination of the above devices. The processor 190 may receive power from the power connector 111 or the power connector 121 and the processor 190 may share power with an external electronic device via the power connector 111 or the power connector 121.

The receiver 150 receives signals in a wireless manner. The receiver 150 may also perform operations such as low noise amplification, impedance matching, frequency mixing, up or down frequency conversion, filtering, amplification, and the like. The processor 190 may receive information of inventory items through the receiver 150 and may show the information through the display 131 accordingly.

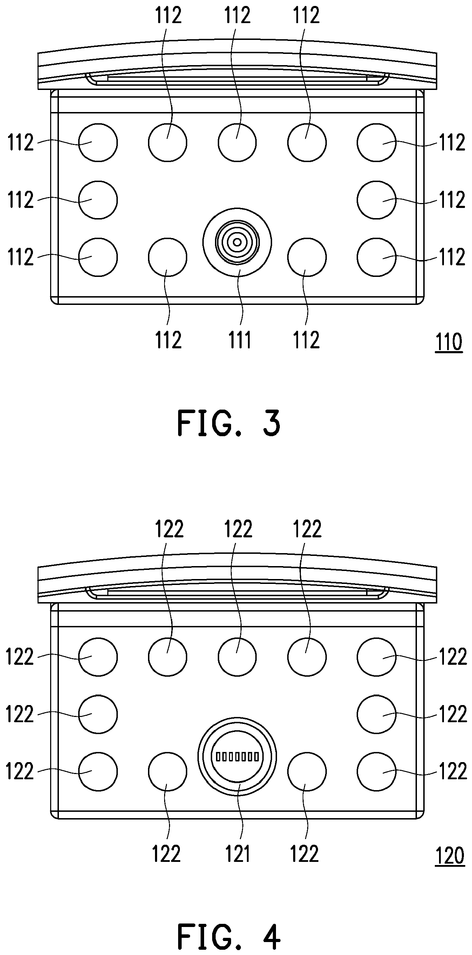

FIG. 3 illustrates a schematic diagram of connecting face 110 according to an embodiment of the disclosure. The connecting face 110 may include the power connector 111 and one or more magnets 112. The magnet 112 may include neodymium magnet with strong magnetic field. Part of magnet 112 may be exposed on the connecting face 110. In this disclosure, we assume the magnetic polarity of the exposed part of magnet 112 represents the magnetic polarity of the magnet 112. For example, "magnet 112 is a north magnetic pole" represents that the part of magnet 112 exposed on the connecting face 110 is the north magnetic pole of the magnet 112.

FIG. 4 illustrates a schematic diagram of connecting face 120 according to an embodiment of the disclosure. The connecting face 120 may include the power connector 121 and one or more magnets 122. The magnet 122 may include neodymium magnet with strong magnetic field. Part of magnet 122 may be exposed on the connecting face 110. In this disclosure, we assume the magnetic polarity of the exposed part of magnet 122 represents the magnetic polarity of the magnet 122. For example, "magnet 122 is a north magnetic pole" represents that the part of magnet 122 exposed on the connecting face 120 is the north magnetic pole of the magnet 122.

The gender of power connector 111 may be different from (or opposite to) the gender of power connector 121. If the gender of power connector 111 is male (e.g., plug, pin, or prong), the gender of power connector 121 may be female (e.g., socket or slot). If the gender of power connector 111 is female, the gender of power connector 121 may be male.

The magnetic polarity of magnet 112 may be different from (or opposite to) the magnetic polarity of magnet 122. If the magnet 112 is a north magnetic pole, the magnet 122 may be a south magnetic pole. If the magnet 112 is a south magnetic pole, the magnet 122 may be a north magnetic pole.

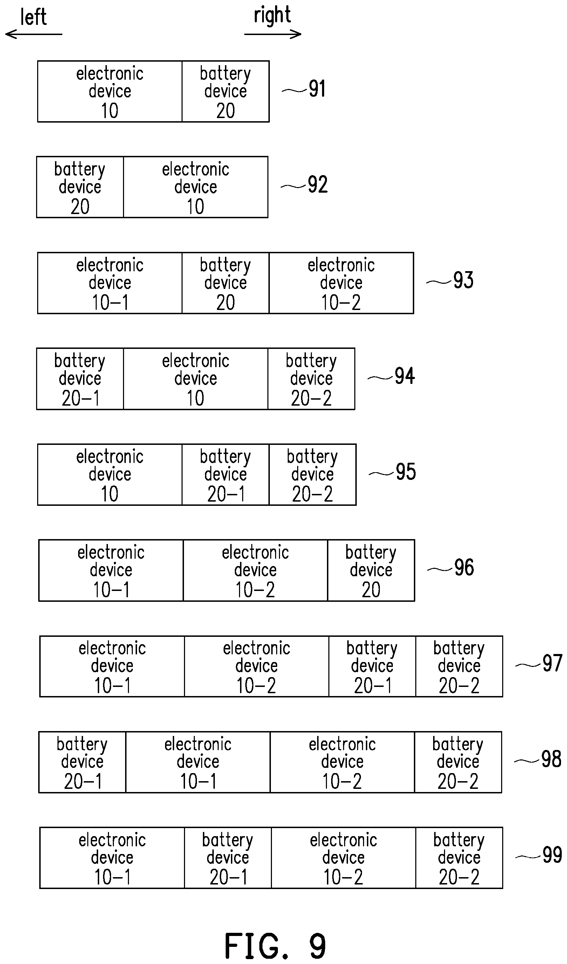

An electronic device 10 (also referred to as "electronic device 10-1") may be connected to another electronic device 10 (also referred to as "electronic device 10-2"). When the electronic device 10-1 and the electronic device 10-2 are connected to each other, the electronic device 10-1 may share the power with the electronic device 10-2. Specifically, the connecting face 110 of the electronic device 10-1 may be attached to the connecting face 120 of the electronic device 10-2. The magnet 112 on the connecting face 110 of the electronic device 10-1 and the magnet 122 on the connecting face 120 of the electronic device 10-2 may be attracted to each other so as to achieve precise alignment between the electronic device 10-1 and the electronic device 10-2. When the magnet 112 of the electronic device 10-1 is attached to the magnet 122 of the electronic device 10-2, the power connector 111 of the electronic device 10-1 may be connected to the power connector 121 of the electronic device 10-2. Accordingly, power may be transferred between the electronic device 10-1 and the electronic device 10-2 via the power connector 111 of the electronic device 10-1 and the power connector 121 of the electronic device 10-2, as shown in device connection configurations 93, 96, 97, or 98 in FIG. 9.

FIG. 9 illustrates examples of device connection configurations according to an embodiment of the disclosure. In FIG. 9, the left side of the electronic device 10 is assumed to be the connecting face 120, the right side of the electronic device 10 is assumed to be the connecting face 110, the left side of the battery device 20 is assumed to be the connecting face 210, and the right side of the battery device 20 is assumed to be the connecting face 220.

In device connection configuration 93, the connecting face 110 of the electronic device 10-1 and the connecting face 120 of the electronic device 10-2 may be connected to each other indirectly and may share the same power provided by the battery device 20.

In device connection configuration 96, the connecting face 110 of the electronic device 10-1 and the connecting face 120 of the electronic device 10-2 may be connected to each other and may share the same power provided by the battery device 20.

In device connection configuration 97 or 98, the connecting face 110 of the electronic device 10-1 and the connecting face 120 of the electronic device 10-2 may be connected to each other and may share the same power provided by at least one of two battery devices 20 including the battery device 20-1 and the battery device 20-2.

It should be noted that, since the magnet 112 of the electronic device 10-1 and the magnet 112 of the electronic device 10-2 repel each other, the connecting face 110 of the electronic device 10-1 cannot be attached to the connecting face 110 of the electronic device 10-2. Similarly, since the magnet 122 of the electronic device 10-1 and the magnet 122 of the electronic device 10-2 repel each other, the connecting face 120 of the electronic device 10-1 cannot be attached to the connecting face 120 of the electronic device 10-2. Accordingly, the user would not accidently connect the two power connectors of the same gender (i.e., the two power connectors 111 of the electronic device 10-1 and the electronic device 10-2, or the two power connectors 121 of the electronic device 10-1 and the electronic device 10-2) to each other. That is, the design of the connecting face of the disclosure may ensure that the connection of two devices is foolproof.

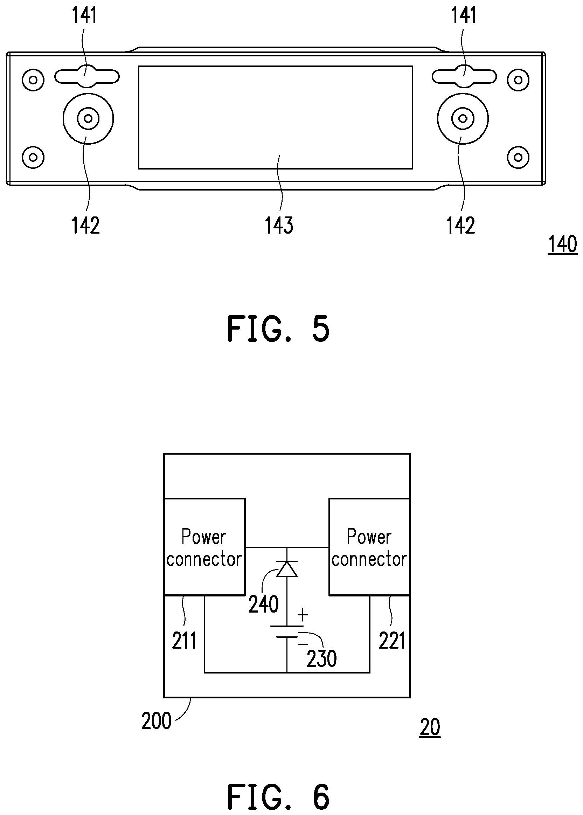

FIG. 5 illustrates a schematic diagram of back face 140 according to an embodiment of the disclosure. The back face 140 may include one or more fasteners such as a hole 141, a magnetic component 142, or a hook and loop fastener 143. For example, the electronic device 10 may be hung from a protruding device (e.g., hook or screw) by using the hole 141, the electronic device 10 may be attached to a metal shelf or surface through the magnetic component 142, or the electronic device 10 may be attached to various types of surface through the hook and loop fastener 143.

Referring to FIG. 1, in one embodiment, the battery device 20 may include a housing 200 in the shape of, for example, a hexahedron (e.g., cuboid), wherein the housing 200 may include a connecting face 210 (also referred to as "left face" of the battery device 20) and a connecting face 220 (also referred to as "right face" of the battery device 20). The connecting face 210 may be opposite to the connecting face 220. FIG. 6 illustrates a schematic diagram of battery device 20 according to an embodiment of the disclosure. The battery device 20 may include a battery 230, a diode 240, a power connector 211, and a power connector 221. In one embodiment, the diode 240 may include a Schottky diode. The anode of the diode 240 may be connected to the positive terminal of the battery 230 and the cathode of the diode 240 may be connected to the power connector 211 and the power connector 221. The negative terminal of the battery 230 may be connected to the power connector 211 and the power connector 221

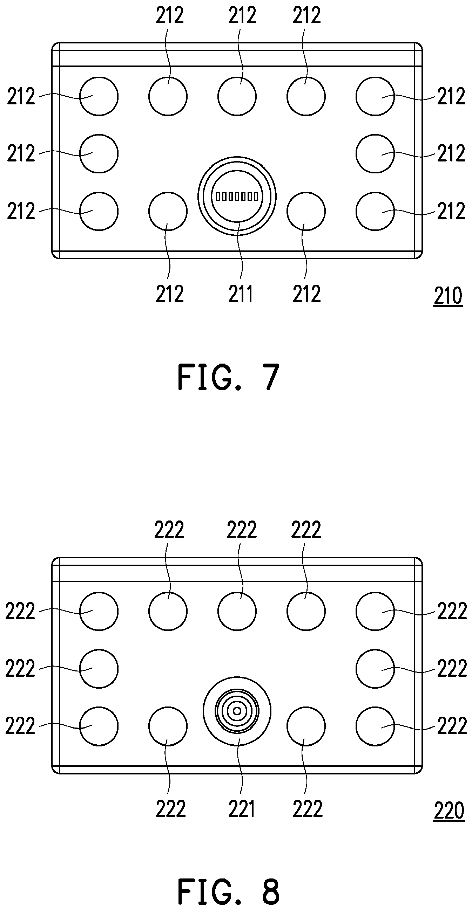

FIG. 7 illustrates a schematic diagram of connecting face 210 according to an embodiment of the disclosure. The connecting face 210 may include the power connector 211 and one or more magnets 212. The magnet 212 may include neodymium magnet with strong magnetic field. Part of magnet 212 may be exposed on the connecting face 210. In this disclosure, we assume the magnetic polarity of the exposed part of magnet 212 represents the magnetic polarity of the magnet 212. For example, "magnet 212 is a north magnetic pole" represents that the part of the magnet 212 exposed on the connecting face 210 is the north magnetic pole of the magnet 212.

FIG. 8 illustrates a schematic diagram of connecting face 220 according to an embodiment of the disclosure. The connecting face 220 may include the power connector 221 and one or more magnets 222. The magnet 222 may include neodymium magnet with strong magnetic field. Part of magnet 222 may be exposed on the connecting face 220. In this disclosure, we assume the magnetic polarity of the exposed part of magnet 222 represents the magnetic polarity of the magnet 222. For example, "magnet 222 is a north magnetic pole" represents that the part of magnet 222 exposed on the connecting face 220 is the north magnetic pole of the magnet 222.

The gender of power connector 211 may be different from (or opposite to) the gender of power connector 221 or 111. That is, the gender of power connector 211 may be same as the gender of power connector 121. If the gender of power connector 211 is male, the gender of power connector 221 or 111 may be female and the gender of power connector 121 may be male. If the gender of power connector 211 is female, the gender of power connector 221 or 111 may be male and the gender of power connector 121 may be female.

The magnetic polarity of magnet 212 may be different from (or opposite to) the magnetic polarity of magnet 222 or 112. That is, the magnetic polarity of magnet 212 may be same as the magnetic polarity of magnet 122. If the magnet 212 is a north magnetic pole, the magnet 222 or 112 may be a south magnetic pole and the magnet 122 may be a north magnetic pole. If the magnet 212 is a south magnetic pole, the magnet 222 or 112 may be a north magnetic pole and the magnet 122 may be a south magnetic pole.

A battery device 20 (also referred to as "battery device 20-1") may be connected to another battery device 20 (also referred to as "battery device 20-2"). When the battery device 20-1 and the battery device 20-2 are connected to each other, the two batteries 230 of the battery device 20-1 and the battery device 20-2 may be connected in parallel. Specifically, the connecting face 220 of the battery device 20-1 may be attached to the connecting face 210 of the battery device 20-2. The magnet 222 on the connecting face 220 of the battery device 20-1 and the magnet 212 on the connecting face 210 of the battery device 20-2 may be attracted to each other so as to achieve precise alignment between the battery device 20-1 and the battery device 20-2. When the magnet 222 of the battery device 20-1 is attached to the magnet 212 of the battery device 20-2, the power connector 221 of the battery device 20-1 may be connected to the power connector 211 of the battery device 20-2. Accordingly, the two batteries 230 of the battery device 20-1 and the battery device 20-2 may be connected in parallel via the power connector 221 of the battery device 20-1 and the power connector 211 of the battery device 20-2, as shown in device connection configurations 94, 95, 97, 98, and 99.

In device connection configuration 94, the connecting face 220 of the battery device 20-1 and the connecting face 210 of the battery device 20-2 may be connected to each other indirectly (i.e., through the electronic device 10) such that the two batteries 230 of the battery device 20-1 and the battery device 20-2 may be connected in parallel. At least one of the battery device 20-1 and the battery device 20-2 may power the electronic device 10.

In device connection configuration 95, the connecting face 220 of the battery device 20-1 and the connecting face 210 of the battery device 20-2 may be connected to each other directly such that the two batteries 230 of the battery device 20-1 and the battery device 20-2 may be connected in parallel. At least one of the battery device 20-1 and the battery device 20-2 may power the electronic device 10.

In device connection configuration 97, the connecting face 220 of the battery device 20-1 and the connecting face 210 of the battery device 20-2 may be connected to each other directly such that the two batteries 230 of the battery device 20-1 and the battery device 20-2 may be connected in parallel. At least one of the battery device 20-1 and the battery device 20-2 may power the two electronic devices 10 connected to the connecting face 210 of the battery device 20-1, wherein the two electronic devices 10 include the electronic device 10-1 and the electronic device 10-2.

In device connection configuration 98, the connecting face 220 of the battery device 20-1 and the connecting face 210 of the battery device 20-2 may be connected to each other indirectly (i.e., through the electronic device 10-1 and the electronic device 10-2) such that the two batteries 230 of the battery device 20-1 and the battery device 20-2 may be connected in parallel. At least one of the battery device 20-1 and the battery device 20-2 may power the electronic device 10-1 and the electronic device 10-2.

In device connection configuration 99, the connecting face 220 of the battery device 20-1 and the connecting face 210 of the battery device 20-2 may be connected to each other indirectly (i.e., through the electronic device 10-2) such that the two batteries 230 of the battery device 20-1 and the battery device 20-2 may be connected in parallel. At least one of the battery device 20-1 and the battery device 20-2 may power the electronic device 10-1 and the electronic device 10-2.

It should be noted that, since the magnet 212 of the battery device 20-1 and the magnet 212 of the battery device 20-2 repel each other, the connecting face 210 of the battery device 20-1 cannot be attached to the connecting face 210 of the battery device 20-2. Similarly, since the magnet 222 of the battery device 20-1 and the magnet 222 of the battery device 20-2 repel each other, the connecting face 220 of the battery device 20-1 cannot be attached to the connecting face 220 of the battery device 20-2. Accordingly, the user would not accidently connect the two power connectors of the same gender (i.e., the two power connectors 211 of the battery device 20-1 and the battery device 20-2, or the two power connectors 221 of the battery device 20-1 and the battery device 20-2) to each other.

A battery device 20 may be connected to an electronic device 10. When the electronic device 10 and the battery device 20 are connected to each other, the battery device 20 may power the electronic device 10. Specifically, the connecting face 110 of the electronic device 10 may be attached to the connecting face 210 of the battery device 20. The magnet 112 on the connecting face 110 of the electronic device 10 and the magnet 212 on the connecting face 210 of the battery device 20 may be attracted to each other so as to achieve precise alignment between the electronic device 10 and the battery device 20. When the magnet 112 of the electronic device 10 is attached to the magnet 212 of the battery device 20, the power connector 111 of the electronic device 10 may be connected to the power connector 211 of the battery device 20. Accordingly, the battery device 20 may provide power to the electronic device 10 via the power connector 211 and the power connector 111, as shown in device connection configurations 91, 93, 94, 95, 96, 97, 98, and 99 in FIG. 9.

In device connection configuration 91, the connecting face 110 of the electronic device 10 and the connecting face 210 of the battery device 20 may be connected to each other and the battery device 20 may power the electronic device 10.

In device connection configuration 93, the battery device 20 may be connected to two electronic devices 10 including the electronic device 10-1 and electronic device 10-2. The connecting face 210 of the battery device 20 may be connected to the connecting face 110 of the electronic device 10-1 so as to power the electronic device 10-1.

In device connection configuration 94, the electronic device 10 may be powered by at least one of two battery devices 20 including battery device 20-1 and battery device 20-2. The connecting face 210 of the battery device 20-2 may be connected to the connecting face 110 of the electronic device 10 so as to power the electronic device 10.

In device connection configuration 95, the electronic device 10 may be powered by at least one of two battery devices 20 including battery device 20-1 and battery device 20-2. The connecting face 210 of the battery device 20-1 may be connected to the connecting face 110 of the electronic device 10 so as to power the electronic device 10.

In device connection configuration 96, the battery device 20 may power two electronic devices 10 connected to each other, including the electronic device 10-1 and electronic device 10-2. The connecting face 210 of the battery device 20 may be directly/indirectly connected to the connecting face 110 of the electronic device 10-1 and the connecting face 110 of the electronic device 10-2 so as to power the electronic device 10-1 and the electronic device 10-2.

In device connection configuration 97, two battery devices 20 (including battery device 20-1 and battery device 20-2) may power two electronic devices 10 connected to each other, including the electronic device 10-1 and electronic device 10-2. The connecting face 210 of the battery device 20-1 and the connecting face 210 of the battery device 20-2 may be directly/indirectly connected to the connecting face 110 of the electronic device 10-1 and the connecting face 110 of the electronic device 10-2, and at least one of battery device 20-1 and battery device 20-2 may power the electronic device 10-1 and the electronic device 10-2.

In device connection configuration 98, two battery devices 20 (including battery device 20-1 and battery device 20-2) may power two electronic devices 10 connected to each other, including the electronic device 10-1 and electronic device 10-2. The connecting face 210 of the battery device 20-2 may be directly/indirectly connected to the connecting face 110 of the electronic device 10-1 and the connecting face 110 of the electronic device 10-2, and at least one of battery device 20-1 and battery device 20-2 may power the electronic device 10-1 and the electronic device 10-2.

In device connection configuration 99, two battery devices 20 (including battery device 20-1 and battery device 20-2) may power two electronic devices 10 connected to each other, including the electronic device 10-1 and electronic device 10-2. The connecting face 210 of the battery device 20-1 may be connected to the connecting face 110 of the electronic device 10-1. The connecting face 210 of the battery device 20-2 may be directly/indirectly connected to the connecting face 110 of the electronic device 10-1 and the connecting face 110 of the electronic device 10-2. At least one of battery device 20-1 and battery device 20-2 may power the electronic device 10-1 and the electronic device 10-2.

It should be noted that, since the magnet 112 of the electronic device 10 and the magnet 222 of the battery device 20 repel each other, the connecting face 110 of the electronic device 10 cannot be attached to the connecting face 220 of the battery device 20. Similarly, since the magnet 212 of the battery device 20 and the magnet 122 of the electronic device 10 repel each other, the connecting face 210 of the battery device 20 cannot be attached to the connecting face 120 of the electronic device 10. Accordingly, the user would not accidently connect the two power connectors (i.e., the power connector 111 of the electronic device 10 and the power connector 221 of the battery device 20, or the power connector 121 of the electronic device 10 and the power connector 211 of the battery device 20) with the same gender to each other.

On the other hand, the connecting face 120 of the electronic device 10 may be attached to the connecting face 220 of the battery device 20. The magnet 122 on the connecting face 120 of the electronic device 10 and the magnet 222 on the connecting face 220 of the battery device 20 may be attracted to each other so as to achieve precise alignment between the electronic device 10 and the battery device 20. When the magnet 122 of the electronic device 10 is attached to the magnet 222 of the battery device 20, the power connector 121 of the electronic device 10 may be connected to the power connector 221 of the battery device 20. Accordingly, the battery device 20 may provide power to the electronic device 10 via the power connector 221 and the power connector 121, as shown in device connection configurations 92, 93, 94, 98, and 99 in FIG. 9.

In device connection configuration 92, the connecting face 220 of the battery device 20 and the connecting face 120 of the electronic device 10 may be connected to each other. The battery 20 may power the electronic device 10.

In device connection configuration 93, the battery device 20 may be connected to two electronic devices 10 including the electronic device 10-1 and the electronic device 10-2. The connecting face 220 of the battery device 20 may be connected to the connecting face 120 of the electronic device 10-2 so as to power the electronic device 10-2.

In device connection configuration 94, the electronic device 10 may be powered by at least one of two battery devices 20 including battery device 20-1 and battery device 20-2. The connecting face 220 of the battery device 20-1 may be connected to the connecting face 120 of the electronic device 10 so as to power the electronic device 10.

In device connection configuration 98, two battery device 20 (including battery device 20-1 and battery device 20-2) may power two electronic device 10 connected to each other, including the electronic device 10-1 and the electronic device 10-2. The connecting face 220 of the battery device 20-1 may be directly/indirectly connected to the connecting face 120 of the electronic device 10-1 and the connecting face 120 of the electronic device 10-2, and at least one of battery device 20-1 and battery device 20-2 may power the electronic device 10-1 and the electronic device 10-2.

In device connection configuration 99, two battery devices 20 (including battery device 20-1 and battery device 20-2) may power two electronic devices 10 connected to each other, including the electronic device 10-1 and electronic device 10-2. The connecting face 220 of the battery device 20-1 may be connected to the connecting face 120 of the electronic device 10-2 so as to power the electronic device 10-2.

In one embodiment, if an electronic device 10 is directly/indirectly connected to a plurality of battery devices 20, the electronic device 10 may be powered by the battery device 20 with higher voltage. For example, in device connection configuration 94 as shown in FIG. 9, the electronic device 10 may be connected to the battery device 20-1 and the battery device 20-2. The power may be provided to the electronic device 10 from the battery device 20-1 but not from the battery device 20-2 in response to the voltage of the battery 230 in the battery device 20-1 being greater than the voltage of the battery 230 in the battery device 20-2. On the contrary, the power may be provided to the electronic device 10 from the battery device 20-2 but not from the battery device 20-1 in response to the voltage of the battery 230 in the battery device 20-2 being greater than the voltage of the battery 230 in the battery device 20-1. The power may be provided to the electronic device 10 from both the battery device 20-1 and the battery device 20-2 in response to the voltage of the battery 230 in the battery device 20-1 being equal to the voltage of the battery 230 in the battery device 20-2.

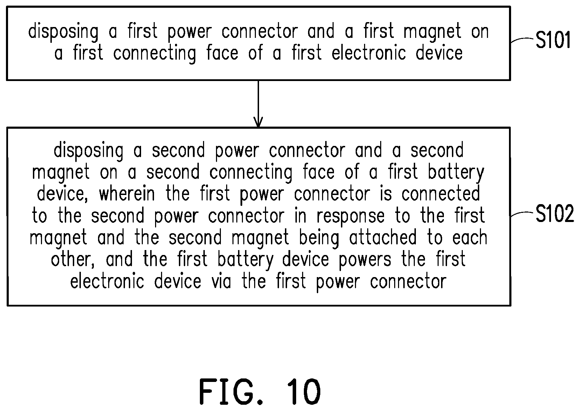

FIG. 10 illustrates a flowchart of battery powered method according to an embodiment of the disclosure, wherein the battery powered method may be implemented by the battery powered system 1 as shown in FIG. 1. In step S101, disposing a first power connector and a first magnet on a first connecting face of a first electronic device. In step S102, disposing a second power connector and a second magnet on a second connecting face of a first battery device, wherein the first power connector is connected to the second power connector in response to the first magnet and the second magnet being attached to each other, and the first battery device powers the first electronic device via the first power connector.

In summary, the battery powered system of the disclosure may align and connect an electronic device to a battery device by using magnets disposed on the connecting faces between the electronic device and the battery device, wherein the polarities of the magnets may ensure that the connection of two devices is foolproof. An electronic device may be powered by multiple batteries. If one of the batteries needs to be replaced, the electronic device may be powered by the remaining batteries such that the rebooting of the electronic device can be prevented. An electronic device may also connect to one or more electronic devices and share the power with the one or more electronic device. Accordingly, if multiple electronic devices are needed, the disclosure may provide an easy way to dispose and power the multiple electronic devices.

## Claims

1. A battery powered system (1), **characterised in that**, comprising:
a first electronic device (10) with a first connecting face (110), wherein the first connecting face (110) comprises a first power connector (111) and a first magnet (112); and
a first battery device (20) with a second connecting face (210), wherein the second connecting face (210) comprises a second power connector (211) and a second magnet (212), wherein
the first power connector (111) is connected to the second power connector (211) in response to the first magnet (112) and the second magnet (212) being attached to each other, and the first battery device (20) powers the first electronic device (10) via the first power connector (111).

2. The battery powered system (1) of claim 1, wherein the first electronic device (10) further comprising:
a third connecting face (120) comprising a third power connector (121) and a third magnet (122), wherein a first gender of the first power connector (111) is different from a second gender of the third power connector (120), wherein a first magnetic polarity of the first magnet (112) is different from a second magnet polarity of the third magnet (122).

3. The battery powered system (1) of claim 1, wherein the first battery device (20) further comprising:
a third connecting face (220) comprising a third power connector (221) and a third magnet (222), wherein a first gender of the second power connector (211) is different from a second gender of the third power connector (221), wherein a first magnetic polarity of the second magnet (212) is different from a second magnet polarity of the third magnet (222).

4. The battery powered system (1) of claim 3, wherein the first battery device (20) further comprising:
a battery (230) comprising a positive terminal and a negative terminal, wherein the negative terminal is connected to the second power connector (211) and the third power connector (221); and
a diode (240) comprising an anode and a cathode, wherein the anode is connected to the positive terminal and the cathode is connected to the second power connector (211) and the third power connector (221).

5. The battery powered system (1) of claim 1, further comprising:
a second battery device connected to a third connecting face (120) of the first electronic device (10) so as to power the first electronic device (10).

6. The battery powered system (1) of claim 5, wherein the first electronic device (10) is powered by the first battery device (20) in response to a first voltage of the first battery device (20) being greater than a second voltage of the second battery device.

7. The battery powered system (1) of claim 1, further comprising:
a second electronic device, wherein the first electronic device (10) shares power with the second electronic device in response to the second electronic device being connected to a third connecting face (120) of the first electronic device (10).

8. The battery powered system (1) of claim 1, further comprising:
a second battery device, wherein the first electronic device (10) is powered by at least one of the first battery device (20) and the second battery device in response to the second battery device being connected to a third connecting face (220) of the first battery device (20).

9. The battery powered system (1) of claim 8, wherein the first electronic device (10) is powered by the first battery device (20) in response to a first voltage of the first battery device (20) being greater than a second voltage of the second battery device.

10. The battery powered system (1) of claim 1, further comprising:
a second electronic device connected to a third connecting face (220) of the first battery device (20), wherein the first battery device (20) powers the first electronic device (10) and the second electronic device.

11. The battery powered system (1) of claim 1, wherein the first electronic device (10) is an electronic label.

12. A battery powered method, **characterised in that**, comprising:
disposing a first power connector and a first magnet on a first connecting face of a first electronic device; and
disposing a second power connector and a second magnet on a second connecting face of a first battery device, wherein
the first power connector is connected to the second power connector in response to the first magnet and the second magnet being attached to each other, and the first battery device powers the first electronic device via the first power connector.
